# EUROPÄISCHE PATENTSCHRIFT

(11) **EP 3 131 770 B1**
(45) Veröffentlichungstag und Bekanntmachung des Hinweises auf die Patenterteilung: **27.12.2017**
(21) Anmeldenummer: 15713377.8
(22) Anmeldetag: 24.03.2015
(51) Int. Cl.: B60G 13/14, B60G 17/015, B60G 17/08, B60G 17/02, B60G 17/0165, B60G 17/06

(54) **VERFAHREN ZUM KONTROLLIEREN EINES FEDERUNGSSYSTEMS**
METHOD FOR CONTROLLING A SUSPENSION SYSTEM
PROCÉDÉ DE CONTRÔLE D'UN SYSTÈME DE SUSPENSION

(30) Priorität: 15.04.2014 DE 102014005594
(43) Veröffentlichungstag der Anmeldung: 22.02.2017
(73) Patentinhaber: Audi AG, 85045 Ingolstadt (DE)
(72) Erfinder: SCHINDLER, Andreas, 85055 Ingolstadt (DE)
(74) Vertreter: Reichert, Thomas Klaus
(86) Internationale Anmeldenummer: PCT/EP2015/000628
(87) Internationale Veröffentlichungsnummer: WO 2015/158412

(56) Entgegenhaltungen:
- EP-B1- 1 997 655
- DE-A1- 10 120 102
- DE-A1-102009 035 596
- US-A1- 2007 194 733
- US-A1- 2010 262 308
- US-A1- 2011 298 399

## Beschreibung

Die Erfindung betrifft ein Verfahren und ein System zum Kontrollieren eines aktiven Federungssystems eines Kraftfahrzeugs.

Ein aktives Federungssystem eines Kraftfahrzeugs umfasst mehrere elektromechanische Steller und wird auch als electronic Active Body Control (eABC) und somit elektronisches aktives Federungskontrollsystem bezeichnet. Dabei ist jedem der üblicherweise vier Steller des aktiven Federungssystems jeweils eine leistungsstarke Elektromaschine zugeordnet, weshalb das aktive Federungssystem in bestimmten Betriebssituationen einen Leistungsbedarf von mehreren Kilowatt hat, wobei eine aufzubringende elektrische Energie bspw. aus einem Mittelvolt-Bordnetz mit einer Nennspannung von 48 V, das mehrere Verbraucher aufweist, gezogen wird. Es ist jedoch auch möglich, dass elektrische Energie von dem Federungssystem in das Mittelvolt-Bordnetz zurückgespeist wird. Das Mittelvolt-Bordnetz umfasst ein Speicherelement, das z. B. als Batterie, z. B. eine 48 V Li-Ionen-Batterie, oder als Kondensator, der als sog. "Supercaps" bezeichnet werden kann, ausgebildet sein kann.

Eine Federungsanordnung für ein Kraftfahrzeug ist aus der Druckschrift DE 10 2007 060 876 A1 bekannt. Hierbei ist zwischen einer gefederten Masse und einer ungefederten Masse ein Dämpfungselement angeordnet, welches einen elektromechanischen Wandler umfasst. Das Dämpfungselement wird in einem aktiven Zustand des elektromechanischen Wandlers durch diesen motorisch betrieben, wobei Bewegungsenergie des Dämpfungselements in einem passiven Zustand des elektromechanischen Wandlers durch diesen in elektrische Energie wandelbar ist. Der aktive oder passive Zustand sind wahlweise einstellbar. Eine Federungsanordnung für ein Kraftfahrzeug ist aus der DE 101 20 102 A1 bekannt.

In der Druckschrift EP 1 997 655 B1 ist ein Aufhängungssystem für ein Fahrzeug beschrieben, bei dem eine Steuerung von Aktoren von einem Ladungszustand einer Batterie abhängig ist. Bei einem Betrieb des Aufhängungssystems ist den Aktoren von der Batterie zu deren Betätigung elektrische Energie zu übertragen.

Vor diesem Hintergrund werden ein Verfahren sowie ein System mit den Merkmalen der unabhängigen Patentansprüche vorgestellt. Ausgestaltungen des vorgesehenen Verfahrens und Systems ergeben sich aus den abhängigen Patentansprüchen und der Beschreibung.

Das Verfahren ist zum Kontrollieren eines aktiven Federungssystems eines Kraftfahrzeugs vorgesehen. Das aktive Federungssystem weist als Aktoren mindestens eine Feder und mindestens einen Dämpfer auf, wobei jedem Aktor ein elektromechanischer Steller zugeordnet ist, der mit diesem Aktor zusammenwirkt. Außerdem ist jeder elektromechanische Steller über ein Bordnetz des Kraftfahrzeugs mit mindestens einem elektrischen Energiespeicher des Kraftfahrzeugs verbunden. Mindestens ein elektromechanischer Steller kann entweder als Generator oder als Motor betrieben werden. Bei einem Betrieb als Generator wird von dem mindestens einen elektromechanischen Steller bei einem Fahrmanöver bei einem Umsetzen elektrischer Energie elektrische Energie erzeugt, deren Menge einen negativen Wert aufweist. Falls der mindestens eine elektromechanische Steller als Motor betrieben wird, wird von dem mindestens einen elektromechanischen Steller bei einem Fahrmanöver bei einem Umsetzen elektrischer Energie elektrische Energie verbraucht, deren Menge einen positiven Wert aufweist. Bei dem Verfahren wird von einem aktuellen Wert für eine Menge an elektrischer Energie, die in dem mindestens einen elektrischen Energiespeicher gespeichert ist, ein Wert für eine Menge an elektrischer Energie, die von dem Federungssystem und somit dem mindestens einen elektromechanischen Steller bei einem aktuell durchzuführenden Fahrmanöver umgesetzt wird, abgezogen und darüber ein Wert für eine Differenz an elektrischer Energie ermittelt. Diese Differenz wird mit mindestens einem Schwellwert verglichen, wobei für den Fall, dass die Differenz an elektrischer Energie größer als ein maximaler Schwellwert ist und dass mindestens ein erster elektromechanischer Steller als Generator betrieben wird, mindestens ein zweiter elektromechanischer Steller als Motor betrieben wird, wobei zumindest ein Teil elektrischer Energie, die von dem mindestens einen ersten elektromechanischen Steller erzeugt wird, gleichzeitig von dem mindestens einen zweiten elektromechanischen Steller in mechanische Energie umgewandelt wird.

Falls der mindestens eine elektromechanische Steller als Generator betrieben wird, ist der Wert der dabei erzeugten Energie negativ und die resultierenden Differenz größer als der aktuelle Wert der elektrischen Energie, die in dem mindestens einen Energiespeicher gespeichert ist. Falls der mindestens eine elektromechanische Steller als Motor betrieben wird, ist der Wert der dabei verbrauchten Energie positiv, so dass die Differenz kleiner als der aktuelle Wert der Energie in den mindestens einen Energiespeicher ist.

Ergänzend kann mindestens eine zusätzliche elektromechanische Maschine, die mit dem mindestens einen elektrischen Energiespeicher verbunden ist, als Motor betrieben werden, um während des Fahrmanövers zusätzlich elektrische Energie zu verbrauchen.

In weiterer Ausgestaltung wird für den Fall, dass die Differenz an elektrischer Energie kleiner als ein minimaler Schwellwert ist und dass mindestens ein erster elektromechanischer Steller als Motor betrieben wird, mindestens ein zweiter elektromechanischer Steller als Generator betrieben wird, wobei zumindest ein Teil elektrischer Energie, die von dem mindestens einen ersten elektromechanischen Steller verbraucht wird, gleichzeitig von dem mindestens einen zweiten elektromechanischen Steller erzeugt wird. Hierzu kann ergänzend mindestens eine zusätzliche elektromechanische Maschine, die mit dem mindestens einen elektrischen Energiespeicher verbunden ist, als Motor betrieben werden.

Üblicherweise wird jeder elektromechanische Steller in einer ersten Betriebsart als Generator und in einer zweiten Betriebsart als Motor betrieben. Jeder in der ersten Betriebsart generatorisch betriebene elektromechanische Steller wird von dem zugeordneten Aktor mechanisch beaufschlagt, wobei von dem generatorisch betriebenen elektromechanischen Steller mechanische Energie in elektrische Energie umgewandelt wird, deren Menge hier definitionsgemäß den negativen Wert aufweist und die in dem mindestens einen elektrischen Energiespeicher gespeichert wird. Dagegen wird von jedem in der zweiten Betriebsart motorisch betriebenen elektromechanischen Steller elektrische Energie aus dem mindestens einen elektrischen Energiespeicher in mechanische Energie umgewandelt, wodurch der dem elektromechanische Steller zugeordnete Aktor mechanisch beaufschlagt wird. Die in dieser Betriebsart verbrauchte elektrische Energie weist definitionsgemäß den positiven Wert auf.

Die Steller können über Stellsignale, die von mindestens einem Kontrollgerät bereitgestellt werden, eingestellt werden. Dies bedeutet auch, dass eine für einen elektromechanischen Steller vorgesehene Betriebsart über die Stellsignale eingestellt wird. Außerdem kann die Menge erzeugter elektrischer Energie, die den negativen Wert aufweist, sowie eine Menge an elektrischer Energie, die den positiven Wert aufweist und gleichzeitig in mechanische Energie umgewandelt wird, über die Stellsignale eingestellt werden.

In der Regel ist mindestens ein Rad des Kraftfahrzeugs über mindestens eine Feder als Aktor und über mindestens einen Dämpfer als Aktor des aktiven Federungssystems mit einem Fahrwerk des Kraftfahrzeugs verbunden.

In Ausgestaltung wird mindestens ein erster elektromechanischer Steller, der mindestens einem ersten Aktor des mindestens eines Rads des Kraftfahrzeugs zugeordnet ist, als Generator und mindestens ein zweiter elektromechanischer Steller, der mindestens einem zweiten Aktor desselben Rads zugeordnet ist, gleichzeitig als Motor betrieben.

Weiterhin ist möglich, dass mindestens ein erster elektromechanischer Steller, der mindestens einem als Feder ausgebildeten Aktor zugeordnet ist, als Generator und mindestens ein weiterer elektromechanischer Steller, der mindestens einem als Dämpfer ausgebildeten Aktor zugeordnet ist, gleichzeitig als Motor betrieben wird.

Alternativ oder ergänzend können mindestens ein erster elektromechanischer Steller, der mindestens einem als Dämpfer ausgebildeten Aktor zugeordnet ist, als Generator und mindestens ein weiterer elektromechanischer Steller, der mindestens einem als Feder ausgebildeten Aktor zugeordnet ist, gleichzeitig als Motor betrieben werden.

Eine Menge an elektrischer Energie, die von dem mindestens einen ersten, als Generator betriebenen elektromechanischen Steller erzeugt wird, sowie eine Menge an elektrischer Energie, die von dem mindestens einen zweiten, als Motor betriebenen elektromechanischen Steller gleichzeitig in mechanische Energie umgewandelt wird, können aufeinander abgestimmt werden.

Diesbezüglich kann eine Menge an elektrischer Energie, die von mindestens einem als Motor betriebenen elektromechanischen Steller in mechanische Energie umgewandelt wird, an die Menge an elektrischer Energie, die gleichzeitig von dem mindestens einen als Generator betriebenen elektromechanischen Steller erzeugt wird, angepasst werden. Dabei kann die Menge an elektrischer Energie, die in mechanische Energie umgewandelt wird, mindestens so groß wie die gleichzeitig erzeugte Menge an elektrischer Energie eingestellt werden. Alternativ hierzu wird eine Menge an mechanischer Energie, die von mindestens einem als Generator betriebenen elektromechanischen Steller in elektrische Energie umgewandelt wird, an die Menge an elektrischer Energie, die gleichzeitig von dem mindestens einen als Motor betriebenen elektromechanischen Steller verbraucht wird, angepasst, wobei die Menge an mechanischer Energie, die in elektrische Energie umgewandelt wird, mindestens so groß wie die gleichzeitig verbrauchte Menge an elektrischer Energie eingestellt wird.

Ferner können die Menge an elektrischer Energie, die in mechanische Energie umgewandelt wird, sowie die gleichzeitig erzeugte Menge an elektrischer Energie, in Abhängigkeit der Menge an elektrischer Energie, die in dem mindestens einen elektrischen Energiespeicher gespeichert ist, aufeinander abgestimmt und/oder miteinander gekoppelt werden. Dies kann bedeuten, dass eine Menge an elektrischer Energie, die von dem mindestens einen ersten, als Generator betriebenen elektromechanischen Steller erzeugt wird, sowie eine Menge an elektrischer Energie, die von dem mindestens einen zweiten, als Motor betriebenen elektromechanischen Steller in mechanische Energie umgewandelt wird, aufeinander abgestimmt werden, wobei eine Summe des negativen Werts der Menge der erzeugten elektrischen Energie und des positiven Werts der Menge der verbrauchten elektrischen Energie Null werden kann.

In weiterer Ausgestaltung wird die Menge an elektrischer Energie, die in mechanische Energie umgewandelt wird, mindestens so groß wie die gleichzeitig erzeugte Menge an elektrischer Energie eingestellt.

Der maximale Schwellwert und/oder der minimale Schwellwert kann bzw. können zudem abhängig von einer Anzahl der generatorisch betriebenen Steller festgelegt werden.

Außerdem können weitere Parameter für elektrische Energie, die zwischen den Stellern untereinander sowie mit dem mindestens einen elektromechanischen Energiespeicher ausgetauscht werden, berücksichtigt werden. Eine zeitliche Änderung der umgesetzten elektrischen Energie wird als Leistung bezeichnet. Die Leistung hängt von einem fließenden Strom und einer anliegenden Spannung ab. Die Energie hängt zusätzlich noch von der Zeit, bspw. einem Zeitintervall für eine Dauer des durchzuführenden Fahrmanövers ab, bei dem die elektrische Energie umgesetzt wird.

In Ausgestaltung des Verfahrens kann ein Wert eines Stroms, der während des Fahrmanövers von dem Federungssystem zum Umsetzen elektrischer Energie benötigt wird, mit einem hierfür vorgesehenen Schwellwert verglichen werden, wobei für den Fall, dass der Wert des Stroms geringer als der Schwellwert ist und dass der mindestens eine erste elektromechanischer Steller als Generator betrieben wird, der mindestens eine zweite elektromechanische Steller als Motor betrieben wird.

Das erfindungsgemäße System ist zum Kontrollieren eines aktiven Federungssystems eines Kraftfahrzeugs ausgebildet. Dabei umfasst das aktive Federungssystem als Aktoren mindestens eine Feder und mindestens einen Dämpfer, wobei jedem Aktor ein elektromechanischer Steller zugeordnet ist, der mit diesem Aktor zusammenwirkt, wobei jeder elektromechanische Steller über ein Bordnetz des Kraftfahrzeugs mit mindestens einem elektrischen Energiespeicher des Kraftfahrzeugs verbunden ist. Dabei ist mindestens ein elektromechanischer Steller als Generator zu betreiben, wobei von dem mindestens einen elektromechanischen Steller bei einem Fahrmanöver umgesetzte elektrische Energie zu erzeugen ist, deren Menge einen negativen Wert aufweist. Alternativ ist der mindestens eine elektromechanische Steller als Motor zu betreiben, wobei von dem mindestens einen elektromechanischen Steiler bei einem Fahrmanöver umgesetzte elektrische Energie zu verbrauchen ist, deren Menge einen positiven Wert aufweist. Das System weist ein Kontrollgerät auf, das dazu ausgebildet ist, von einem aktuellen Wert für eine Menge an elektrischer Energie, die in dem mindestens einen elektrischen Energiespeicher gespeichert ist, einen Wert für eine Menge an elektrischer Energie, die von dem Federungssystem bei einem aktuell durchzuführenden Fahrmanöver umzusetzen, d. h. entweder zu erzeugen oder zu verbrauchen ist, abzuziehen und einen dabei ermittelten Wert für eine Differenz an elektrischer Energie mit mindestens einem Schwellwert zu vergleichen. Für den Fall, dass die Differenz an elektrischer Energie größer als ein maximaler Schwellwert ist und dass mindestens ein erster elektromechanischer Steller als Generator zu betreiben ist, ist das Kontrollgerät dazu ausgebildet, mindestens einen zweiten elektromechanischen Steller als Motor zu betreiben, wobei zumindest ein Teil elektrischer Energie, die von dem mindestens einen ersten elektromechanischen Steller zu erzeugen ist, gleichzeitig von dem mindestens einen zweiten elektromechanischen Steller in mechanische Energie umzuwandeln ist.

In weiterer Ausgestaltung ist das Kontrollgerät für den Fall, dass die Differenz an elektrischer Energie kleiner als ein minimaler Schwellwert ist und dass mindestens ein erster elektromechanischer Steller als Motor zu betreiben ist, dazu ausgelegt, mindestens einen zweiten elektromechanischen Steller als Motor zu betreiben, wobei zumindest ein Teil elektrischer Energie, die von dem mindestens einen ersten elektromechanischen Steller zu verbrauchen ist, gleichzeitig von dem mindestens einen zweiten elektromechanischen Steller zu erzeugen ist.

Das Verfahren und das System sind zum Kontrollieren des aktiven elektrischen Federungssystems zur Beeinflussung einer Leistungsanforderung an das elektrische Bordnetz des Kraftfahrzeugs vorgesehen.

Bei einer Umsetzung des Verfahrens werden elektromechanische Steller zum Beaufschlagen von Federn und Dämpfern des aktiven elektrischen Federungssystems, bspw. nach einem Algorithmus, speziell kontrolliert und somit angesteuert und/oder geregelt, wodurch ein Bedarf des aktiven elektrischen Federungssystems an elektrischer Energie gezielt variiert werden kann. Hierbei werden Vorgaben für Stellsignale zum Kontrollieren der elektromechanischen Steller konkret beeinflusst, wodurch einerseits gezielt eine vorgesehene bestimmte Menge an elektrischer Energie aus dem Bordnetz gezogen und andererseits wieder rückgespeist wird. Dabei wird ein Wert der elektrischen Energie in dem mindestens einen Energiespeicher variiert und somit entweder vergrößert oder verringert.

Üblicherweise ist einer Feder, die einem Rad des Kraftfahrzeugs zugeordnet ist, mindestens ein elektromechanischer Steller, ein sog. Feder-Steller, zugeordnet, der je nach Betriebssituation als Motor oder Generator betrieben werden kann. Weiterhin kann auch einem Dämpfer, der demselben Rad des Kraftfahrzeugs zugeordnet ist, ebenfalls mindestens ein elektromechanischer Steller, ein sog. Dämpfer-Steller, zugeordnet sein, der je nach Betriebssituation auch entweder als Motor oder als Generator betrieben werden kann.

Falls ein derartiger elektromechanischer Steller als Motor betrieben wird, wird durch diesen elektrische Energie, deren Menge den positiven Wert aufweist, aus dem mindestens einen elektrischen Speicherelement des Bordnetzes in mechanische Energie umgewandelt, wodurch die Feder oder der Dämpfer, der dem elektromechanischen Steller zugeordnet ist, in Bewegung zu versetzen ist. Andererseits ist beim Betrieb des elektromechanischen Stellers als Generator vorgesehen, dass bei einer Bewegung der Feder oder des Dämpfers, die bzw. der dem elektromechanischen Steller zugeordnet ist, durch diesen Steller mechanische Energie in elektrische Energie umgewandelt wird.

Dabei wird der mindestens eine als Motor betriebene Steller zur Kompensation von elektrischer Energie, die gleichzeitig von dem mindestens einen Steller, der als Generator betrieben wird, erzeugt wird, in Ausgestaltung mit einer höheren Dynamik angesteuert, wodurch das mindestens eine elektrische Speicherelement des Bordnetzes gezielt entladen werden kann. Somit können andere Nutzer bzw. Verbraucher des Bordnetzes, die als elektromechanische Maschine ausgebildet sind, im Betrieb als Generator elektrische Energie in das Speicherelement zurückspeisen. Eine zusätzliche Anregung, üblicherweise Aufbauanregung des Kraftfahrzeugs durch den mindestens einen als Motor betriebenen Steller, die aus der erhöhten Dynamik resultiert, kann durch eine gezielte Verhärtung des mindestens einen aktiven Dämpfers, bspw. Verstelldämpfers des Federungssystems, der mit dem mindestens einen Steller wechsel- und/oder zusammenwirkt, wieder gedämpft werden.

Bei einer Strategie zum Kontrollieren und somit zum Steuern und/oder Regeln des elektromechanischen, aktiven Federungssystems werden einem entweder motorisch oder generatorisch betriebenen Steller des Federungssystems asynchrone Stellsignale bereitgestellt. So wird für den Fall, dass eine große Menge an elektrischer Energie benötigt wird, ein Strom, der einem derartigen elektromechanischen Steller aus dem mindestens einen elektrischen Energiespeicher bereitzustellen ist, schnell hochgedreht, wodurch der mindestens eine elektrische Energiespeicher bzw. ein entsprechendes Speicherelement schnell entladen wird. Um eine geringe Rekuperationsleistung und/oder Rückspeisung der elektrischen Energie in den mindestens einen elektrischen Energiespeicher zu ermöglichen, wird der mindestens eine elektromechanische Steller dagegen langsam abgebremst.

Durch eine Umsetzung des Verfahrens kann ein Ladungszustand des mindestens einen elektrischen Energiespeichers des Bordnetzes und somit des gesamten Bordnetzes durch die vorgesehene Strategie zur Regelung des Federungssystems gezielt beeinflusst werden, wodurch u. a. eine Verfügbarkeit von sicherheitskritischen Nutzern des Bordnetzes erhöht werden kann. Der Ladungszustand ist hier durch den Wert der Menge an elektrischer Energie in mindestens einem Energiespeicher definiert. Dabei wird die Regelung mit einem Algorithmus durchgeführt, durch den ein Bedarf des Federungssystems an elektrischer Energie beeinflusst wird. Die mit dem Algorithmus durchführbare Regelung umfasst die Maßnahme, sowohl die elektromechanischen Steller des Federungssystems, die den Federn zugeordnet sind, als auch die elektromechanischen Steller der aktiven Dämpfer des Federungssystems und/oder Fahrwerks bei der vorgesehenen Kontrolle des Federungssystems über die Stellsignale gezielt anzusteuern, wobei eine Ansteuerung der Steller, die den Federn zugeordnet sind, als auch eine Ansteuerung der Steller, die den Dämpfern zugeordnet sind, miteinander gekoppelt werden, um in einem gesamten System elektrische Energie abzubauen.

Das Bordnetz des Kraftfahrzeugs, das bspw. eine Betriebsspannung von 48 V aufweist, wird von mehreren Komponenten bzw. Nutzern und/oder Verbrauchern gleichzeitig genutzt, wobei den Komponenten elektrische Energie mit der vorgesehenen Betriebsspannung zur Leistungsentnahme bereitgestellt wird, wobei über die Zeit weiterhin ein maximaler Stromgradient bereitgestellt wird. Weiterhin kann eine Komponente des Kraftfahrzeugs, die als elektromechanischer Steller und somit als Elektromaschine ausgebildet ist, in einem generatorischen Betrieb mechanische Energie in elektrische Energie umwandeln und zur internen Rekuperation in den mindestens einen elektrischen Energiespeicher des Bordnetzes rückspeisen. Dagegen wird von derselben Elektromaschine in einem motorischen Betrieb elektrische Energie aus dem mindestens einen elektrischen Energiespeicher in mechanische Energie umgewandelt.

Durch eine Ausführung des beschriebenen Verfahrens wird erreicht, dass der mindestens eine elektrische Energiespeicher, üblicherweise eine Batterie bzw. ein Akkumulator, genug Kapazität zur Speicherung von elektrischer Energie aufweist und demnach nur teilweise aber nie vollständig geladen ist. Somit ist es möglich, dass elektromechanische Steller, die den Federn des aktiven elektronischen Federungssystems zugeordnet sind, elektromechanische Steller, die den Dämpfern des aktiven elektronischen Fahrwerks und/oder des Federungssystems zugeordnet sind, als auch andere Komponenten des Bordnetzes, üblicherweise elektromechanische Maschinen, sofern diese elektrische Energie erzeugen, diese in den mindestens einen elektrischen Energiespeicher zurückspeisen und somit rekuperieren können. Demnach können sämtliche Komponenten vollständig betrieben werden, wobei diese auch sicherheitskritische Funktionen ausführen können.

Weitere Ausgestaltungen und Vorteile der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in der Zeichnung schematisch dargestellt und wird unter Bezugnahme auf die Zeichnung schematisch und ausführlich beschrieben.
Figur 1 zeigt in schematischer Darstellung eine Ausführungsform eines erfindungsgemäßen Systems sowie jeweils ein Beispiel für Komponenten eines aktiven elektronischen Federungssystems und eines elektrischen Bordnetzes eines Kraftfahrzeugs bei Durchführung einer Ausführungsform des erfindungsgemäßen Verfahrens.
Figur 2 zeigt unterschiedliche Teildiagramme eines Diagramms zur Durchführung unterschiedlicher Varianten der Ausführungsform des erfindungsgemäßen Verfahrens.

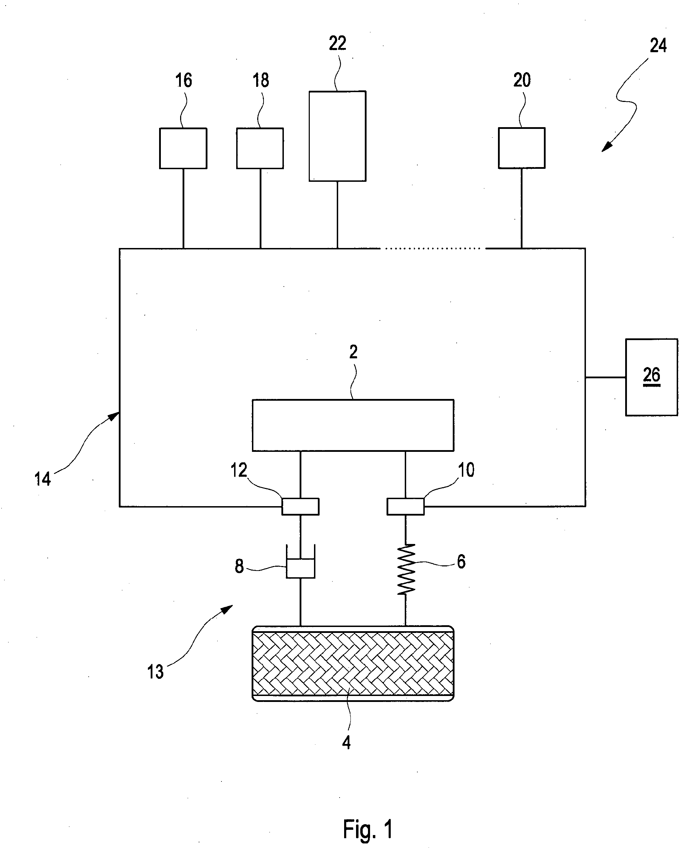

In Figur 1 sind als Teilsysteme des Kraftfahrzeugs dessen Fahrwerk 2 und eines von mehreren Rädern 4 dargestellt. Dabei ist jedes Rad 4 über eine Feder als ersten Aktor 6 und einen Dämpfer als zweiten Aktor 8 mit dem Fahrwerk 2 verbunden. Weiterhin ist dem als Feder ausgebildeten Aktor 6 ein federspezifischer elektromechanischer Steller 10 bzw. elektromechanischer Feder-Steller 10 zugeordnet, der dazu ausgebildet ist, mit der Feder zusammenzuwirken, wobei dieser federspezifische elektromechanische Feder-Steller 10 je nach Betriebssituation entweder als Motor oder Generator betrieben wird. Dem als Dämpfer ausgebildeten Aktor 8 ist ein dämpferspezifischer elektromechanischer Steller 12 bzw. Dämpfer-Steller 12 zugeordnet, der mit dem Dämpfer zusammenwirkt und je nach Betriebssituation entweder als Motor oder Generator betrieben wird.

Die Aktoren 6, 8 sowie die Steller 10, 12 sind als Komponenten des aktiven elektronischen Federungssystems 13 und/oder, je nach Definition, als Komponenten des Fahrwerks 2 des Kraftfahrzeugs ausgebildet. Da das Kraftfahrzeug mehrere Räder 4 aufweist, sind weitere hier nicht gezeigte Aktoren 6, 8, d. h. Federn und Dämpfer, sowie Steller 10, 12, d. h. Feder- und Dämpfer-Steller 10, 12, ebenfalls als Komponenten des aktiven elektronischen Federungssystems 13 und/oder des Fahrwerks 2 ausgebildet. Dabei ist jeweils ein weiteres Rad 4 ebenfalls über eine Feder als ersten Aktor 6 und einen Dämpfer als zweiten Aktor 8, denen jeweils ein elektromechanischer Steller 10, 12 zugeordnet ist, mit dem Fahrwerk 2 des Kraftfahrzeugs verbunden.

Außerdem sind sämtliche elektromechanischen Steller 10, 12 mit einem elektrischen Bordnetz 14 bzw. einem Energiebordnetz des Kraftfahrzeugs verbunden und je nach Definition auch als Komponenten des elektrischen Bordnetzes 14 ausgebildet. Als weitere, mit den Stellern 10, 12 verbundene Komponenten weist das Bordnetz 14 mehrere Nutzer 16, 18, 20 und mindestens einen elektrischen Energiespeicher 22 auf. Dabei kann mindestens einer dieser Nutzer 16, 18, 20 als elektromechanische Maschine ausgebildet sein.

Dabei ist vorgesehen, dass dem mindestens einen elektromechanischen Steller 10, 12 des aktiven Federungssystems 13, wenn dieser in einer Betriebssituation als Motor bzw. motorisch betrieben wird, um den mindestens einen ihm zugeordneten Aktor 6, 8, d. h. die mindestens eine ihm zugeordnete Feder und/oder den mindestens einen ihm zugeordneten Dämpfer mechanisch zu beaufschlagen und somit zu bewegen, von dem mindestens einen elektrischen Energiespeicher 22 elektrische Energie bereitgestellt wird, die von dem jeweiligen Steller 10, 12 zum Beaufschlagen des ihm zugeordneten mindestens einen Aktors 6, 8 in mechanische Energie umgewandelt wird. In diesem Fall wirkt der mindestens eine Steller 10, 12 als Verbraucher elektrischer Energie, wobei eine Menge an verbrauchter elektrischer Energie definitionsgemäß einen positiven Wert aufweist.

Falls der mindestens eine elektromechanische Steller 10, 12 im Unterschied hierzu durch den mindestens einen ihm zugeordneten Aktor 6, 8, d. h. durch die mindestens eine Feder und/oder durch den mindestens einen Dämpfer beaufschlagt und somit bewegt wird, wird der mindestens eine Steller 10, 12 in einer Betriebssituation als Generator bzw. generatorisch betrieben, wobei von dem mindestens einen Steller 10, 12 die von der Feder und/oder dem Dämpfer erzeugte mechanische Energie in elektrische Energie umgewandelt wird. Diese nunmehr erzeugte elektrische Energie wird dem mindestens einen elektrischen Energiespeicher 22 über das elektrische Bordnetz 14 bereitgestellt und in dem mindestens einen elektrischen Energiespeicher 22 gespeichert. In dieser Betriebssituation wirkt der mindestens eine elektromechanische Steller 10, 12 als Erzeuger elektrischer Energie, wobei eine Menge an erzeugter elektrischer Energie definitionsgemäß einen negativen Wert aufweist.

Mindestens einer der Nutzer 16, 18, 20 kann als Erzeuger und/oder als Verbraucher von elektrischer Energie ausgebildet sein bzw. betrieben werden. Falls der mindestens eine Nutzer 16, 18, 20 lediglich als Erzeuger elektrischer Energie ausgebildet ist und als solcher betrieben wird, wird dem mindestens einen Energiespeicher von diesem mindestens einen Nutzer 16, 18, 20 eine Menge an elektrischer Energie mit negativem Wert bereitgestellt. Falls der mindestens eine Nutzer 16, 18, 20 lediglich als Verbraucher elektrischer Energie ausgebildet ist und als solcher betrieben wird, ist diesem mindestens einen Nutzer 16, 18, 20 von dem mindestens einen Energiespeicher eine Menge an elektrischer Energie mit positivem Wert bereitzustellen. Alternativ oder ergänzend ist es auch möglich, dass der mindestens eine Nutzer 16, 18, 20, ähnlich wie der mindestens eine Steller 10, 12, je nach Betriebssituation als Verbraucher elektrischer Energie, bspw. als Motor, oder als Erzeuger elektrischer Energie, bspw. als Generator, betrieben wird.

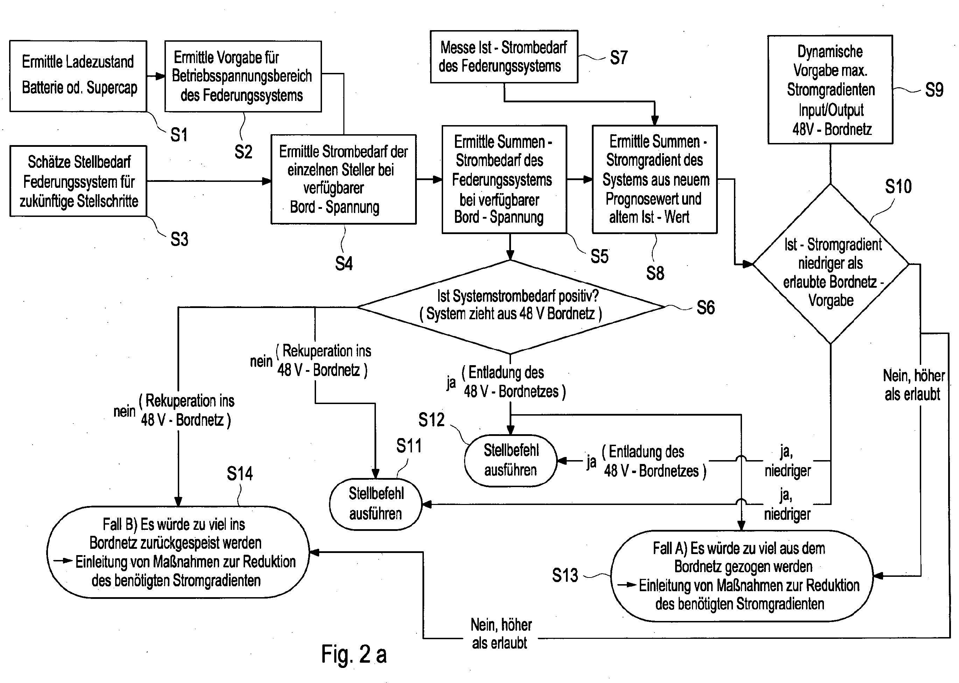

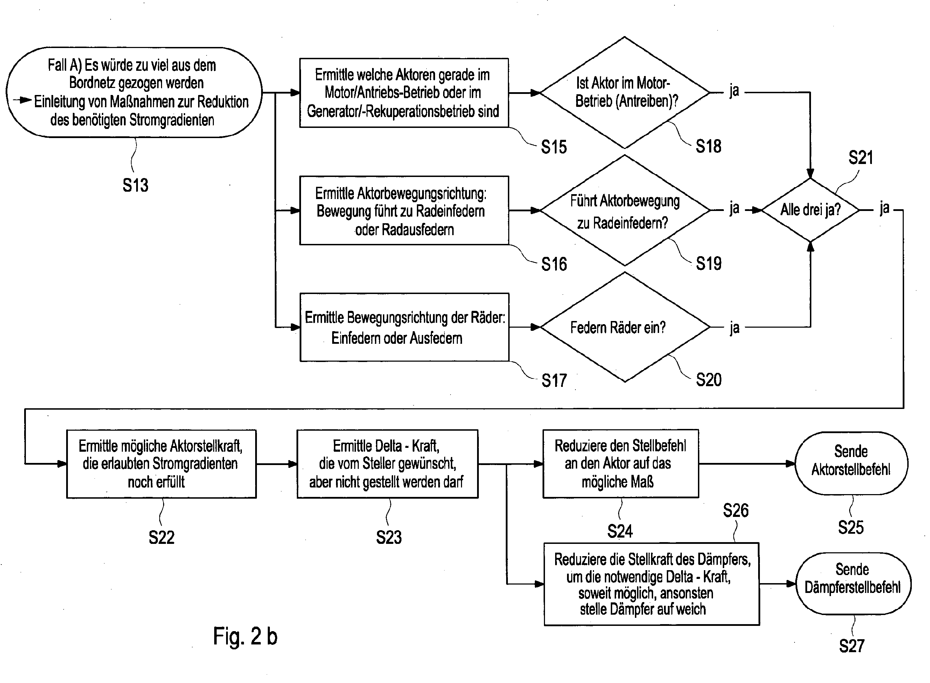

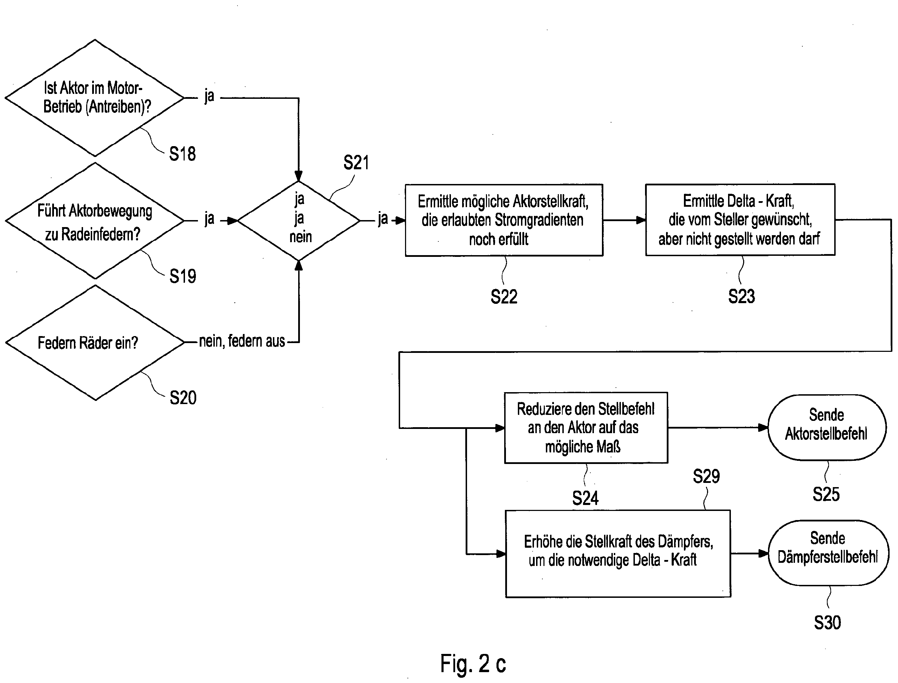

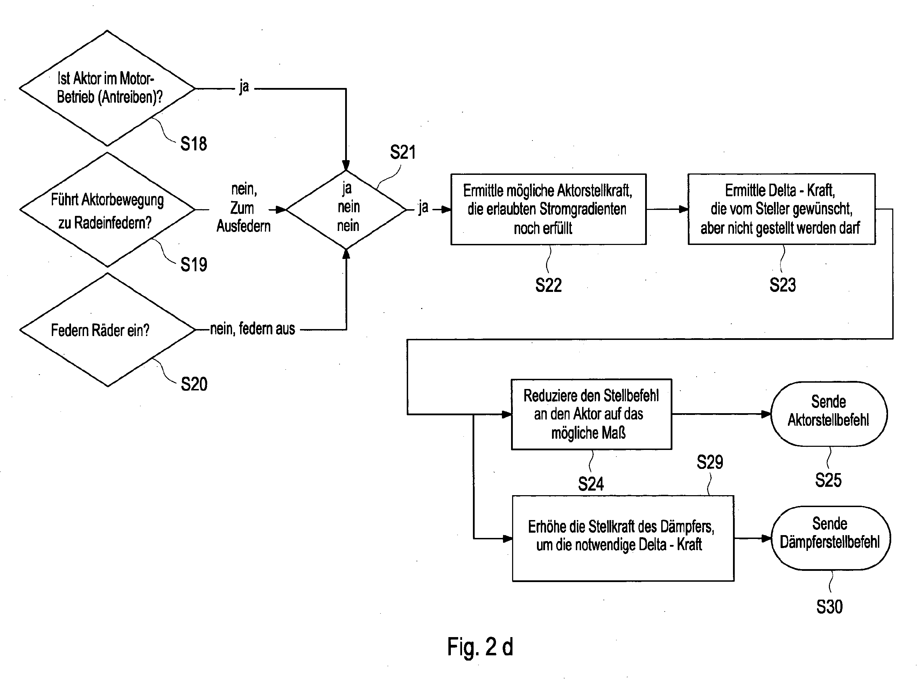

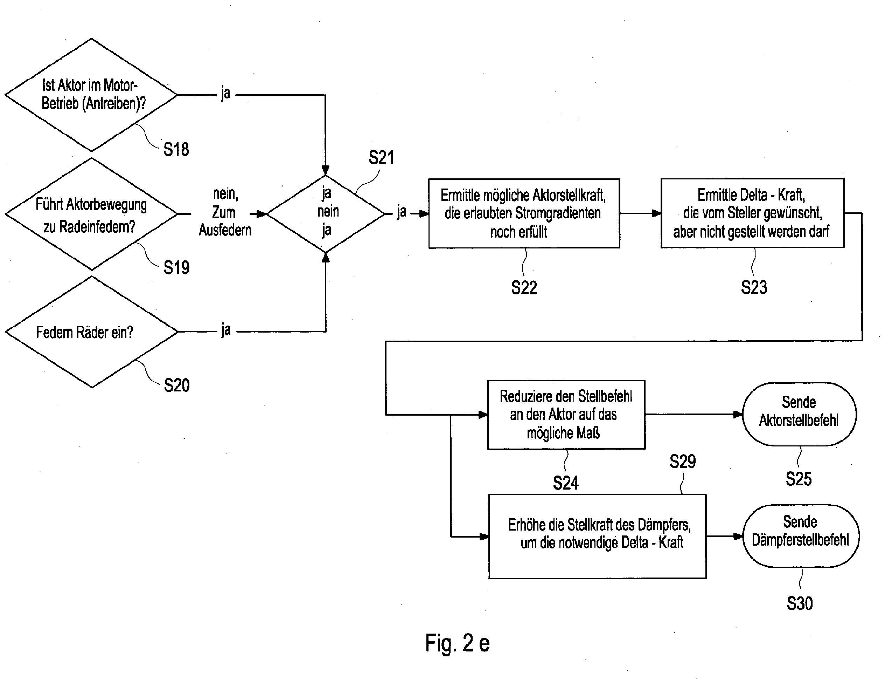

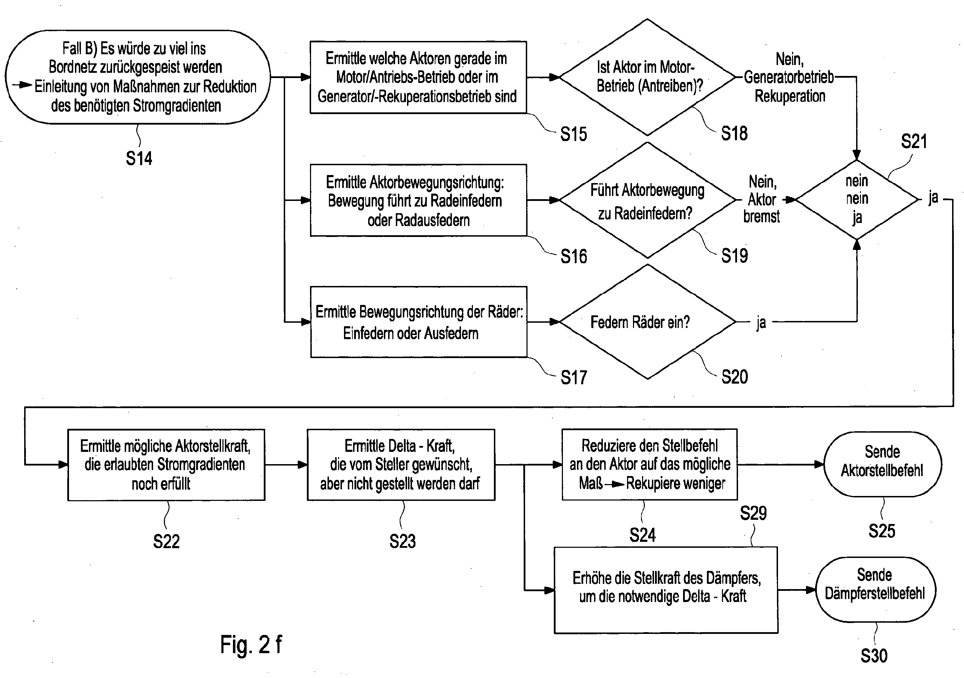

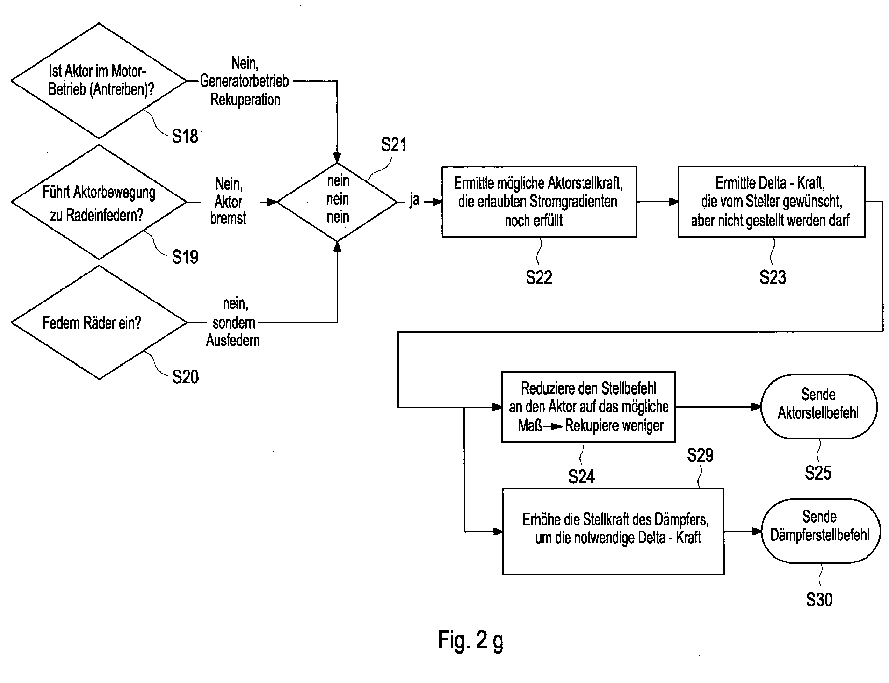

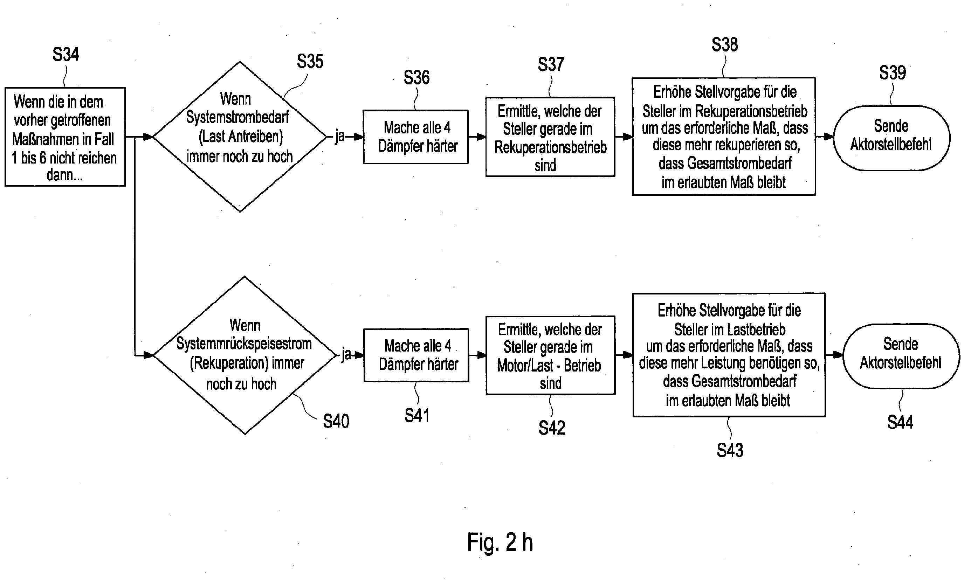

Die Ausführungsform des erfindungsgemäßen Systems 24 umfasst ein Kontrollgerät 26, das dazu ausgebildet ist, einen Betrieb von mindestens einem der vorgestellten elektromechanischen Steller 10, 12 unter Berücksichtigung eines Betriebszustands mindestens eines Aktors 6, 8 des aktiven Federungssystems 13 und/oder unter Berücksichtigung eines Betriebszustands mindestens eines weiteren elektromechanischen Stellers 10, 12 sowie unter Berücksichtigung eines Ladezustands des mindestens einen elektrischen Energiespeichers 22, wobei der Ladezustand durch einen Wert der Menge an elektrische Energie in dem Energiespeicher 22 festgelegt ist, bei Durchführung der nachfolgend anhand von Figur 2 beschriebenen Ausführungsform des erfindungsgemäßen Verfahrens zu kontrollieren und somit zu steuern und/oder zu regeln. Außerdem kann das Kontrollgerät 26 dazu ausgebildet sein, den mindestens einen elektromechanischen Steller 10, 12 unter Berücksichtigung eines Betriebszustands mindestens eines Nutzers 16, 18, 20 zu kontrollieren. Ferner ist es möglich, dass ein Betriebszustand mindestens eines Nutzers 16, 18, 20 unter Berücksichtigung eines Betriebszustands mindestens eines Aktors 6, 8 des aktiven Federungssystems 13, unter Berücksichtigung eines Betriebszustands mindestens eines weiteren elektromechanischen Stellers 10, 12, unter Berücksichtigung eines Ladezustands des mindestens einen elektrischen Energiespeichers 22 und/oder unter Berücksichtigung eines Betriebszustands mindestens eines weiteren Nutzers 16, 18, 20 von dem Kontrollgerät 26 kontrolliert wird.

Die anhand der Teildiagramme in den Figuren 2a, 2b, 2c, 2d, 2e, 2f, 2g und 2h vorgestellten Varianten der Ausführungsform des erfindungsgemäßen Verfahrens können durch die in Figur 1 vorgestellte Ausführungsform des Systems 24 durchgeführt werden. In einem Teildiagramm aus Figur 2a werden Schritte der Ausführungsform des Verfahrens beschrieben, auf denen sämtliche anhand der nachfolgend beschriebenen Varianten der Ausführungsform des Verfahrens basieren.

Dabei wird in einem erste Schritt S1 ein Ladezustand und somit der Wert der Menge an elektrischer Energie ermittelt, die in dem mindestens einen elektrischen Energiespeicher 22, der als Batterie oder Kondensator ausgebildet ist, gespeichert ist. Danach wird in einem Schritt S2 eine Vorgabe für einen Bereich bzw. für Werte für eine Spannung zum Betreiben des Federungssystems 13 ermittelt. Zugleich wird in einem Schritt S3 ein Stellbedarf des Federungssystems 13 für zukünftige Stellschritte und somit ein Bedarf an elektrischer Energie bei einem zukünftigen Fahrmanöver geschätzt. Darauf basierend wird in einem Schritt S4 ein Bedarf an Strom und/oder elektrischer Energie der Steller 10, 12 bei einer verfügbaren Spannung des Bordnetzes 14 ermittelt. Ausgehend von Schritt S4 wird in einem Schritt S5 der gesamte Bedarf an Strom und/oder elektrischer Energie des Federungssystems 13 bei der verfügbaren Spannung des Bordnetzes 14 ermittelt. Auf Grundlage dessen wird in einem Schritt S6 als Bedingung überprüft, ob ein Bedarf des Federungssystems 13 an Strom positiv ist, so dass von dem Federungssystem 13 aus dem Energiespeicher 22 des Bordnetzes 14, das hier eine Spannung von 48 V aufweist, elektrische Energie, deren Menge den positiven Wert aufweist, benötigt wird.

Außerdem wird in einem Schritt S7 ein aktueller Wert bzw. Ist-Wert eines Bedarfs bzw. Ist-Bedarf an Strom und/oder elektrischer Energie durch das Federungssystem 13 gemessen. In einem Schritt S8 wird aus einem neuen prognostizierten Wert des Stroms und/oder der Menge an elektrischer Energie, den das Federungssystem 13 benötigt, und einem alten Ist-Wert unter Berücksichtigung der Zeit, d. h. einem Zeitpunkt zu dem der alte Ist-Wert in Schritt S7 gemessen wurde, und einem Zeitpunkt, zu dem der Wert in Schritt S5 prognostiziert wurde, ein aktueller Wert bzw. Ist-Wert für einen Stromgradienten und somit für eine zeitliche Änderung des Stroms ermittelt. In einem Schritt S9 wird ein Wert für einen maximalen Stromgradienten und somit für eine maximale zeitliche Änderung des Stroms unabhängig davon, ob elektrische Energie, deren Menge den positiven Wert aufweist, aus dem Energiespeicher 22 gezogen oder ob elektrische Energie, deren Menge den negativen Wert aufweist, bei einer Rekuperation in den Energiespeicher 22 gespeist wird, dynamisch vorgegeben. In einem Schritt S10 werden der in Schritt S8 ermittelte Ist-Wert für den Stromgradienten mit dem in Schritt S9 vorgegebenen Wert miteinander verglichen, wobei in Ausgestaltung der Betrag des Ist-Werts mit dem Betrag des vorgegebenen Werts verglichen und dabei die Bedingung geprüft wird, ob der Ist-Wert des Stromgradienten niedriger als der vorgegebene Wert ist.

Weiterhin werden auf Grundlage dessen, ob die in Schritt S6 zu prüfende Bedingung, und ob die in Schritt S10 zu prüfende Bedingung erfüllt ist oder nicht, entschieden, welcher der Schritte S11, S12, S13, S14 nachfolgend durchgeführt wird:
Falls ein Bedarf an Strom und/oder eine Menge an benötigter Energie (Schritt S6) negativ ist, so dass eine Rekuperation an elektrischer Energie in den Energiespeicher 22 vorgesehen ist, und falls der Istwert des Stromgradienten (Schritt S10) niedriger als die Vorgabe ist, wird in Schritt S11 als Maßnahme für mindestens einen Steller 10, 12 ein Stellbefehl bereitgestellt, wodurch der mindestens eine Steller 10, 12 als Generator betrieben und von dem mindestens einen Steller 10, 12 elektrische Energie in den Energiespeicher 22 gespeist wird.

Falls laut Schritt S6 der Bedarf an Strom und/oder eine Menge an benötigter Energie positiv ist, was für eine Entladung des Energiespeichers 22 spricht, und falls der Wert des Stromgradienten niedriger als die laut Schritt S10 hierfür erlaubte Vorgabe ist, was hier ebenfalls für eine Entladung des Energiespeichers 22 spricht, wird in Schritt S12 als Maßnahme für mindestens einen Steller 10, 12 ein Stellbefehl bereitgestellt, wodurch der mindestens eine Steller 10, 12 als Motor betrieben und von dem mindestens einen Steller 10, 12 elektrische Energie aus dem Energiespeicher 22 gezogen wird.

Falls laut Schritt S6 der Bedarf an Strom und/oder eine Menge an benötigter elektrischer Energie positiv ist und falls der Wert des Stromgradienten höher als die laut Schritt S10 hierfür erlaubte Vorgabe ist, ergibt sich laut Schritt S13, dass unter den vorgegebenen Bedingungen zu viel Energie aus dem Energiespeicher 22 gezogen werden würde, worauf sich in Schritt S13 Fall A ergibt und Maßnahmen durchgeführt werden, die vorsehen, dass eine Reduktion des benötigten Stromgradienten eingeleitet wird. Weitere Schritte bzw. Maßnahmen, die auf Fall A bzw. Schritt S13 folgen, sind anhand der Teildiagramme in den Figuren 2b, 2c, 2d und 2e beschrieben.

Falls ein Bedarf an Strom und/oder eine Menge an benötigter elektrischer Energie (Schritt S6) negativ ist, so dass eine Rekuperation an elektrischer Energie in den Energiespeicher 22 vorgesehen ist, und falls der Istwert des Stromgradienten (Schritt S10) höher als die Vorgabe ist, ergibt sich in Schritt S14 Fall B, wonach in den mindestens einen Energiespeicher 22 zu viel Energie zurückgespeist werden würde, weshalb bei Eintreten von Fall B Maßnahmen zur Reduktion des benötigten Stromgradienten eingeleitet werden. Weitere Schritte bzw. Maßnahmen, die auf Fall B bzw. Schritt S14 folgen, sind anhand der Teildiagramme in den Figuren 2f und 2g beschrieben.

Wie sowohl das Teildiagramm aus Figur 2b als auch das Teildiagramm aus Figur 2f zeigt, werden nach Eintreten von Fall A bzw. von Schritt S13 (Figur 2b) aber auch nach Eintreten von Fall B bzw. Schritt S14 (Figur 2f) in den jeweils nachfolgenden Schritten S15, S16 und S17 Zustände der Aktoren 6, 8 ermittelt. Dabei folgt auf jeden der Schritte S15, S16, S17 jeweils ein daraus resultierender weiterer Schritt S18, S19, S20, in dem eine Bedingung überprüft wird.

Dabei wird in Schritt S15 ermittelt, welcher Steller 10, 12 gerade als Motor und welcher als Generator betrieben wird. Dabei wird ein Aktor 6, 8, der einem als Motor betriebenen Steller 10, 12 zugeordnet ist, motorisch angetrieben. Dagegen wird für den Fall, dass ein Aktor 6, 8 einen ihm zugeordneten Steller 10, 12 antriebt, dieser Steller 10, 12 als Generator betrieben, durch den elektrische Energie in einem Rekuperationsbetrieb in den Energiespeicher 22 gespeichert wird. In dem nachfolgenden Schritt S18 wird die Bedingung überprüft, ob sich der Aktor 6, 8 im Motorbetrieb befindet und dabei von dem ihm zugeordneten Steller 10, 12, der als Motor zu betreiben ist, angetrieben wird.

In Schritt S16 wird eine Bewegungsrichtung eines Aktors 6, 8 ermittelt, woraus wiederum ermittelt wird, ob die Bewegung des Aktors 6, 8 zu einer Einfederung oder zu einer Ausfederung des Rads 4 führt. Darauf wird in Schritt S19 die Bedingung überprüft, ob die Bewegung des Aktors 6, 8 zu einer Einfederung des Rads 4 führt.

In Schritt S17 wird eine Bewegungsrichtung eines Rads 4, das mit einem dem Rad 4 direkt zugeordneten Aktor 6, 8 direkt und mit einem dem Rad 4 indirekt zugeordneten Steller 10, 12 indirekt zusammenwirkt, ermittelt, worauf in Schritt S20 die Bedingung überprüft wird, ob das Rad 4 einfedert.

Bei der ersten Variante des Verfahrens, die anhand des Teildiagramms in Figur 2a beschrieben ist, ist vorgesehen, dass laut Schritt S21 alle in den Schritten S18, S19 und S20 überprüften Bedingungen erfüllt sind (ja). Demnach wird der Aktor 6, 8 im Motorbetrieb durch den ihm zugeordneten Steller 10, 12 motorisch angetrieben (Schritt S18), wobei eine Bewegung des Aktors 6, 8 zu einer Einfederung des Rads 4 führt (Schritt S19) und das Rad 4 eingefedert wird (Schritt S20). Ist dies der Fall, wird ausgehend von Schritt S21 in Schritt S22 eine mögliche Aktorstellkraft und somit eine Kraft ermittelt, die der Steller 10, 12 auf den ihm zugeordneten Akfor 6, 8 ausübt und zudem die für den Stromgradienten vorgesehene Vorgabe erfüllt. Danach wird in Schritt S23 ein Wert für eine mögliche Delta-Kraft bzw. Differenz-Kraft ermittelt, die von dem Steller 10, 12 zusätzlich gewünscht bzw. angefordert wird, um diese Delta-Kraft ergänzend zu einer aktuell ausgeübten Kraft auf den dem Rad 4 zugeordneten Aktor 6, 8 auszuüben, wobei zu beachten ist, dass diese zusätzliche Delta-Kraft unzulässig ist und nicht gestellt werden darf. Nachfolgend wird in Schritt S24 ein Stellbefehl auf den Steller 6, 8 und den ihm zugeordneten Aktor 10, 12 auf ein mögliches zulässiges Maß beschränkt, wobei dieser Stellbefehl in Schritt S25 an den dem Aktor 10, 12 zugeordneten Steller 6, 8 gesendet wird. Außerdem wird in Schritt S26 eine Stellkraft, die ein Steller 6, 8 auf einen als Dämpfer ausgebildeten Aktor 6, 8 ausübt, um eine Kraft, maximal um eine Delta-Kraft reduziert. Falls dies nicht möglich ist, wird der als Dämpfer ausgebildete Aktor 10, 12 weich eingestellt. In Schritt S27 wird aufgrund einer in Schritt S26 getroffenen Maßnahme ein Stellbefehl gesendet, mit dem der Steller 6, 8, der dem als Dämpfer ausgebildeten Aktor 10, 12 zugeordnet ist, zu beaufschlagen ist.

Bei der zweiten Variante des Verfahrens, die anhand des Teildiagramms in Figur 2c beschrieben ist, wird im Schritt S21 ermittelt, dass lediglich die in den Schritten S18, S19 geprüften Bedingungen erfüllt sind (ja), wohingegen die in Schritt S20 geprüfte Bedingung S20 nicht erfüllt ist (nein). Somit wird der Aktor 6, 8 im Motorbetrieb durch den ihm zugeordneten Steller 10, 12 angetrieben (Schritt S18), wobei eine Bewegung des Aktors 6, 8 zu einer Einfederung des Rads 4 führt (Schritt S19). Allerdings wird das Rad 4 hier nicht eingefedert (Schritt S20, nein). Daraufhin werden die Schritte S22 und S23 sowie S24 und S25 wie bei der ersten Variante durchgeführt. Variantenspezifisch wird jedoch in einem Schritt S29 eine Stellkraft, die ein Steller 6, 8 auf einen als Dämpfer ausgebildeten Aktor 6, 8 ausübt, um die zuvor in Schritt S23 ermittelte Delta-Kraft erhöht und in Schritt S30 ein Stellbefehl gesendet, mit dem der Steller 6, 8, der dem als Dämpfer ausgebildeten Aktor 10, 12 zugeordnet ist, zu beaufschlagen ist.

Das Teildiagramm aus Figur 2d zeigt, dass bei der dritten Variante der Ausführungsform des Verfahrens der Aktor 6, 8 im Motorbetrieb durch den ihm zugeordneten Steller 10, 12 angetrieben wird und somit die in Schritt S18 geprüfte Bedingung erfüllt ist (ja). Allerdings sind die in den Schritten S19 und S20 geprüften Bedingungen nicht erfüllt (nein), weshalb hier eine Bewegung des Aktors 6, 8 zu einer Ausfederung des Rads 4 führt (Schritt S19) und das Rad 4 ausgefedert wird (Schritt S20). Die Schritte S22, S23, S24 und S25 werden wie bei den beiden ersten Varianten durchgeführt. Die simultan durchzuführenden Schritte werden wie bei der zweiten Variante, die durch das Teildiagramm aus Figur 2c beschrieben ist, durchgeführt.

Die anhand des Teildiagramms aus Figur 2e vorgestellte vierte Variante der Ausführungsform des Verfahrens unterscheidet sich von den mit den Teildiagrammen aus den Figuren 2b, 2c und 2d beschriebenen Varianten, dass nunmehr in Schritt S21 ermittelt wird, dass der Aktor 6, 8 im Motorbetrieb durch den ihm zugeordneten Steller 10, 12 motorisch angetrieben wird (Schritt S18, ja), dass eine Bewegung des Aktors 6, 8 zu einer Ausfederung des Rads 4 führt (Schritt S19, nein) und dass das Rad 4 hier eingefedert wird (Schritt S20). Auf Grundlage dessen werden jedoch auch bei der vierten Variante der Ausführungsform des Verfahrens in Schritt S25 an den dem Aktor 10, 12 zugeordneten Stellern 6, 8 ein Stellbefehl, der auf ein mögliches zulässiges Maß beschränkt ist, und in Schritt S30 ein weiterer Stellbefehl gesendet, mit dem der Steller 6, 8, der dem als Dämpfer ausgebildeten Aktor 10, 12 zugeordnet ist, zu beaufschlagen ist.

Bei den weiteren Varianten der Ausführungsform des Verfahrens, die anhand der Diagramme aus den Figuren 2f und 2g. beschrieben sind, wird von dem in Figur 2a vorgestellten Fall B (Schritt S14) ausgegangen.

In der mit dem Teildiagramm aus Figur 2f vorgestellten fünften Variante wird in Schritt S21 ermittelt, dass der Aktor 6, 8 nicht im Motorbetrieb sondern im Generatorbetrieb betrieben wird. Somit wird der dem Aktor 6, 8 zugeordnete Steller 10, 12 als Generator betrieben, wobei der Steller 10, 12 von dem Aktor 6, 8 bewegt und somit angetrieben wird (Schritt S18, nein). Außerdem wird eine Bewegung des Rads 4 von dem Aktor 6, 8 gebremst, anstatt dass das Rad 4 eingefedert wird (Schritt S19, nein). Allerdings wird das Rad 4 dennoch eingefedert (Schritt S20, ja). Danach werden hier dieselben Schritte S22 bis S30, wie bei einer der Varianten, die mit den Teildiagrammen aus den Figuren 2c bis 2e dargestellt sind, durchgeführt, wobei hier in Schritt S24 zu betonen ist, dass von dem Steller 10, 12 nunmehr weniger mechanische Energie in elektrische Energie umzuwandeln und somit zu rekuperieren ist.

Alternativ hierzu wird in der sechsten Variante der Ausführungsform des Verfahrens, die mit dem Teildiagramm aus Figur 2g dargestellt ist, in Schritt S21 ermittelt, dass der Aktor 6, 8 im Generatorbetrieb betrieben und der dem Aktor 6, 8 zugeordnete Steller 10, 12 von dem Aktor 6, 8 als Generator angetrieben wird (Schritt S18, nein). Außerdem wird eine Bewegung des Rads 4 von dem Aktor 6, 8 gebremst (Schritt S19, nein) und das Rad 4 ausgefedert (Schritt S20, nein). Danach werden dieselben Schritte S22 bis S30 wie bei der fünften Variante (Figur 2f) durchgeführt.

Eine siebte Variante der Ausführungsform des Verfahrens wird, wie das Teildiagramm aus Figur 2h zeigt, durchgeführt, wenn in einem zusätzlichen Schritt S34 ermittelt wird, dass keine der voranstehend beschriebenen Varianten aus den Figuren 2a bis 2g ausreichend ist.

Falls ausgehend von Schritt S34 festgestellt wird, dass eine Bedarf des Federungssystems 13, wenn mindestens einer der Steller 10, 12 als Motor betrieben wird, immer noch zu hoch ist (Schritt S35), werden in Schritt S36 alle als Dämpfer ausgebildeten Aktoren 8 verhärtet. Danach wird in Schritt S37 ermittelt, welcher mindestens eine Steller 10, 12 nunmehr als Generator im Rekuperationsbetrieb betrieben wird. Danach wird in Schritt S38 eine Vorgabe bzw. Stellvorgabe für den mindestens einen im Rekuperationsbetrieb befindlichen bzw. als Generator angetriebenen Steller 10, 12 um ein die Rekuperation und somit die Umwandlung mechanischer Energie in elektrische Energie durch den mindestens einen Steller 10, 12 erhöhendes Maß erhöht, so dass der Bedarf an Strom durch das Federungssystem 13 unter einem hierfür vorgesehenen Wert liegt. Ausgehend von der Stellvorgabe wird in Schritt S39 an den dem Aktor 6, 8 zugeordneten Steller 10, 12 ein Stellbefehl gesendet.

Falls jedoch ausgehend von Schritt S34 in Schritt S40 alternativ festgestellt wird, dass eine Menge an mechanischer Energie, die bei einem generatorischen bzw. rekuperatorischen Betrieb des mindestens einen Stellers 10, 12 in elektrische Energie umgewandelt und in den Energiespeicher 22 rückgespeist wird, immer noch zu hoch ist, werden in Schritt S41 alle als Dämpfer ausgebildeten Aktoren 8 verhärtet. Danach wird in Schritt S42 ermittelt, welcher mindestens eine Steller 10, 12 gerade als Motor im Lastbetrieb betrieben wird. Danach wird in Schritt S43 eine Vorgabe bzw. Stellvorgabe für den mindestens einen im Lastbetrieb befindlichen bzw. als Motor angetriebenen Steller 10, 12 zur Erhöhung der mechanischen Leistung des Stellers 10, 12 erhöht, so dass der Bedarf an Strom durch das Federungssystem 13 über einem hierfür vorgesehenen Wert liegt. Ausgehend von der Stellvorgabe wird in Schritt S44 an den dem Aktor 6, 8 zugeordneten Steller 10, 12 ein Stellbefehl gesendet.

## Patentansprüche

1. Verfahren zum Kontrollieren eines aktiven Federungssystems (13) eines Kraftfahrzeugs, wobei das aktive Federungssystem (13) als Aktoren (6, 8) mindestens eine Feder und mindestens einen Dämpfer aufweist, wobei jedem Aktor (6, 8) ein elektromechanischer Steller (10, 12) zugeordnet ist, der mit diesem Aktor (6, 8) zusammenwirkt, wobei jeder elektromechanische Steller (10, 12) über ein Bordnetz (14) des Kraftfahrzeugs mit mindestens einem elektrischen Energiespeicher (22) des Kraftfahrzeugs verbunden ist, wobei mindestens ein elektromechanischer Steller (10, 12) entweder als Generator betrieben wird, wobei von dem mindestens einen elektromechanischen Steller (10, 12) bei einem Fahrmanöver elektrische Energie erzeugt wird, deren Menge einen negativen Wert aufweist, oder wobei der mindestens eine elektromechanische Steller (10, 12) als Motor betrieben wird, wobei von dem mindestens einen elektromechanischen Steller (10, 12) elektrische Energie verbraucht wird, deren Menge einen positiven Wert aufweist, wobei von einem aktuellen Wert für eine Menge an elektrischer Energie, die in dem mindestens einen elektrischen Energiespeicher (22) gespeichert ist, ein Wert für eine Menge an elektrischer Energie, die von dem Federungssystem (13) bei einem aktuell durchzuführenden Fahrmanöver umgesetzt wird, abgezogen und ein dabei ermittelter Wert für eine Differenz an elektrischer Energie mit mindestens einem Schwellwert verglichen wird, wobei für den Fall, dass die Differenz an elektrischer Energie größer als ein maximaler Schwellwert ist und dass mindestens ein erster elektromechanischer Steller (10, 12) als Generator betrieben wird, mindestens ein zweiter elektromechanischer Steller (10, 12) als Motor betrieben wird, wobei zumindest ein Teil elektrischer Energie, die von dem mindestens einen ersten elektromechanischen Steller (10, 12) erzeugt wird, gleichzeitig von dem mindestens einen zweiten elektromechanischen Steller (10, 12) in mechanische Energie umgewandelt wird.

2. Verfahren nach Anspruch 1, bei dem mindestens eine zusätzliche elektromechanische Maschine, die mit dem mindestens einen elektrischen Energiespeicher (22) verbunden ist, als Motor betrieben wird.

3. Verfahren nach Anspruch 1 oder 2, bei dem für den Fall, dass die Differenz an elektrischer Energie kleiner als ein minimaler Schwellwert ist und dass mindestens ein erster elektromechanischer Steller (10, 12) als Motor betrieben wird, mindestens ein zweiter elektromechanischer Steller (10, 12) als Generator betrieben wird, wobei zumindest ein Teil elektrischer Energie, die von dem mindestens einen ersten elektromechanischen Steiler (10, 12) verbraucht wird, gleichzeitig von dem mindestens einen zweiten elektromechanischen Steller (10, 12) erzeugt wird.

4. Verfahren nach Anspruch 3, bei dem mindestens eine zusätzliche elektromechanische Maschine, die mit dem mindestens einen elektrischen Energiespeicher (22) verbunden ist, als Generator betrieben wird.

5. Verfahren nach einem der voranstehenden Ansprüche, bei dem jeder elektromechanische Steller (10, 12) in einer ersten Betriebsart als Generator und in einer zweiten Betriebsart als Motor betrieben wird, wobei jeder in der ersten Betriebsart generatorisch betriebene elektromechanische Steller (10, 12) von dem zugeordneten Aktor (6, 8) mechanisch beaufschlagt wird, wobei von dem generatorisch betriebenen elektromechanischen Steller (10, 12) mechanische Energie in elektrische Energie umgewandelt wird, die in dem mindestens einen elektrischen Energiespeicher (22) gespeichert wird, wobei von jedem in der zweiten Betriebsart motorisch betriebenen elektromechanischen Steller (10, 12) elektrische Energie aus dem mindestens einen elektrischen Energiespeicher (22) in mechanische Energie umgewandelt wird, wodurch der dem elektromechanische Steller (10, 12) zugeordnete Aktor (6, 8) mechanisch beaufschlagt wird.

6. Verfahren nach einem der voranstehenden Ansprüche, bei dem mindestens ein erster elektromechanischer Steller (10, 12), der mindestens einem ersten Aktor (6, 8) eines Rads (4) des Kraftfahrzeugs zugeordnet ist, als Generator und mindestens ein zweiter elektromechanischer Steller (10, 12), der mindestens einem zweiten Aktor (6, 8) desselben Rads (4) zugeordnet ist, gleichzeitig als Motor betrieben wird.

7. Verfahren nach einem der voranstehenden Ansprüche, bei dem mindestens ein erster elektromechanischer Steller (10, 12), der mindestens einem als Feder ausgebildeten Aktor (6, 8) zugeordnet ist, als Generator und mindestens ein weiterer elektromechanischer Steller (10, 12), der mindestens einem als Dämpfer ausgebildeten Aktor (6, 8) zugeordnet ist, gleichzeitig als Motor betrieben wird.

8. Verfahren nach einem der voranstehenden Ansprüche, bei dem ein Wert eines Stroms, der während des Fahrmanövers von dem Federungssystem (13) zum Umsetzen elektrischer Energie benötigt wird, mit einem Schwellwert verglichen wird, wobei für den Fall, dass der Wert des Stroms geringer als der Schwellwert ist und dass der mindestens eine erste elektromechanische Steller (10, 12) als Generator betrieben wird, der mindestens eine zweite elektromechanische Steller (10, 12) als Motor betrieben wird, wobei zumindest ein Teil elektrischer Energie, die von dem mindestens einen ersten elektromechanischen Steller (10, 12) erzeugt wird, gleichzeitig von dem mindestens einen zweiten elektromechanischen Steller (10, 12) in mechanische Energie umgewandelt wird.

9. System zum Kontrollieren eines aktiven Federungssystems (13) eines Kraftfahrzeugs, wobei das aktive Federungssystem (13) als Aktoren (6, 8) mindestens eine Feder und mindestens einen Dämpfer aufweist, wobei jedem Aktor (6, 8) ein elektromechanischer Steller (10, 12) zugeordnet ist, der mit diesem Aktor (6, 8) zusammenwirkt, wobei jeder elektromechanische Steller (10, 12) über ein Bordnetz (14) des Kraftfahrzeugs mit mindestens einem elektrischen Energiespeicher (22) des Kraftfahrzeugs verbunden ist, wobei mindestens ein elektromechanischer Steller (10, 12) entweder als Generator zu betreiben ist, wobei von dem mindestens einen elektromechanischen Steller (10, 12) bei einem Fahrmanöver elektrische Energie zu erzeugen ist, deren Menge einen negativen Wert aufweist, oder wobei der mindestens eine elektromechanische Steller (10, 12) als Motor zu betreiben ist, wobei von dem mindestens einen elektromechanischen Steller (10, 12) elektrische Energie zu verbrauchen ist, deren Menge einen positiven Wert aufweist, wobei das System ein Kontrollgerät (26) aufweist, das dazu ausgebildet ist, von einem aktuellen Wert für eine Menge an elektrischer Energie, die in dem mindestens einen elektrischen Energiespeicher (22) gespeichert ist, einen Wert für eine Menge an elektrischer Energie, die von dem Federungssystem (13) bei einem aktuell durchzuführenden Fahrmanöver umzusetzen ist, abzuziehen und einen dabei ermittelten Wert für eine Differenz an elektrischer Energie mit mindestens einem Schwellwert zu vergleichen, wobei das Kontrollgerät (26) für den Fall, dass die Differenz an elektrischer Energie größer als ein maximaler Schwellwert ist und dass mindestens ein erster elektromechanischer Steller (10, 12) als Generator zu betreiben ist, dazu ausgebildet ist, mindestens einen zweiten elektromechanischen Steller (10, 12) als Motor zu betreiben, wobei zumindest ein Teil elektrischer Energie, die von dem mindestens einen ersten elektromechanischen Steller (10, 12) zu erzeugen ist, gleichzeitig von dem mindestens einen zweiten elektromechanischen Steller (10, 12) in mechanische Energie umzuwandeln ist.

10. System nach Anspruch 9, bei dem das Kontrollgerät (26) für den Fall, dass die Differenz an elektrischer Energie kleiner als ein minimaler Schwellwert ist und dass mindestens ein erster elektromechanischer Steller (10, 12) als Motor zu betreiben ist, dazu ausgebildet ist, mindestens einen zweiten elektromechanischen Steller (10, 12) als Generator zu betreiben, wobei zumindest ein Teil elektrischer Energie, die von dem mindestens einen ersten elektromechanischen Steller (10, 12) zu verbrauchen ist, gleichzeitig von dem mindestens einen zweiten elektromechanischen Steller (10, 12) zu erzeugen ist.

## Claims

1. Method to control an active suspension system (13) of a motor vehicle, wherein the active suspension system (13) has at least one spring and at least one damper as actuators (6, 8), wherein an electromechanical regulator (10, 12) is allocated to each actuator (6, 8), said electromechanical regulator interacting with this actuator (6, 8), wherein each electromechanical regulator (10, 12) is connected to at least one electrical energy store (22) of the motor vehicle via an electrical system (14) of the motor vehicle, wherein at least one electromechanical regulator (10, 12) is operated either as a generator, wherein electrical energy is generated by the at least one electromechanical regulator (10, 12) in the case of a driving manoeuvre, the quantity of said electrical energy having a negative value, or wherein the at least one electromechanical regulator (10, 12) is operated as a motor, wherein electrical energy is consumed by the at least one electromechanical regulator (10, 12), the quantity of said electrical energy having a positive value, wherein a value for a quantity of electrical energy which is converted by the suspension system (13) in the case of a driving manoeuvre presently being carried out is subtracted from a present value for a quantity of electrical energy which is stored in the at least one electrical energy store (22), and a value determined thereby for a difference of electrical energy is compared to at least one threshold value, wherein in the case that the difference of electrical energy is greater than a maximum threshold value and that at least one first electromechanical regulator (10, 12) is operated as a generator, at least one second electromechanical regulator (10, 12) is operated as a motor, wherein at least one part of the electrical energy which is generated by the at least one first electromechanical regulator (10, 12) is converted into mechanical energy at the same time by the at least one second electromechanical regulator (10, 12).

2. Method according to claim 1, in which at least one additional electromechanical machine which is connected to the at least one electrical energy store (22) is operated as a motor.

3. Method according to claim 1 or 2, in which in the case that the difference in electrical energy is less than a minimum threshold value and that at least one first electromechanical regulator (10, 12) is operated as a motor, at least one second electromechanical regulator (10, 12) is operated as a generator, wherein at least one part of the electrical energy which is consumed by the at least one first electromechanical regulator (10, 12) is generated at the same time by the at least one second electromechanical regulator (10, 12).

4. Method according to claim 3, in which at least one additional electromechanical machine which is connected to the at least one electrical energy store (22) is operated as a generator.

5. Method according to any one of the preceding claims, in which each electromechanical regulator (10, 12) is operated as a generator in a first operating mode and as a motor in a second operating mode, wherein each electromechanical regulator (10, 12) operated as a generator in the first operating mode is mechanically loaded by the allocated actuator (6, 8), wherein mechanical energy is converted into electrical energy by the electromechanical regulator (10, 12) operated as a generator, said electrical energy being stored in the at least one electrical energy store (22), wherein electrical energy from the at least one electrical energy store (22) is converted into mechanical energy by each electromechanical regulator (10, 12) operated as a motor in the second operating mode, whereby the actuator (6, 8) allocated to the electromechanical regulator (10, 12) is mechanically loaded.

6. Method according to any one of the preceding claims, in which at least one first electromechanical regulator (10, 12) which is allocated to at least one first actuator (6, 8) of a wheel (4) of the motor vehicle is operated as a generator and at least one second electromechanical regulator (10, 12) which is allocated to at least one second actuator (6, 8) of the same wheel (4) is operated at the same time as a motor.

7. Method according to any one of the preceding claims, in which the at least one first electromechanical regulator (10, 12) which is allocated to an actuator (6, 8) formed as a spring is operated as a generator and at least one further electromechanical regulator (10, 12) which is allocated to at least one actuator (6, 8) formed as a damper is operated at the same time as a motor.

8. Method according to any one of the preceding claims, in which a value of a current which is required during the driving manoeuvre by the suspension system (13) to convert electrical energy is compared to a threshold value, wherein in the case that the value of the current is lower than the threshold value and that the at least one first electromechanical regulator (10, 12) is operated as a generator, the at least one second electromechanical regulator (10, 12) is operated as a motor, wherein at least one part of the electrical energy which is generated by the at least one first electromechanical regulator (10, 12) is converted into mechanical energy at the same time by the at least one second electromechanical regulator (10, 12).

9. System to control an active suspension system (13) of a motor vehicle, wherein the active suspension system (13) has at least one spring and at least one damper as actuators (6, 8), wherein an electromechanical regulator (10, 12) is allocated to each actuator (6, 8), said electromechanical regulator interacting with this actuator (6, 8), wherein each electromechanical regulator (10, 12) is connected to at least one electrical energy store (22) of the motor vehicle via an electrical system (14) of the motor vehicle, wherein at least one electromechanical regulator (10, 12) is to be operated either as a generator, wherein electrical energy is to be generated by the at least one electromechanical regulator (10, 12) in the case of a driving manoeuvre, the quantity of said electrical energy having a negative value, or wherein the at least one electromechanical regulator (10, 12) is to be operated as a motor, wherein electrical energy is to be consumed by the at least one electromechanical regulator (10, 12), the quantity of said electrical energy having a positive value, wherein the system has a control device (26) which is formed to subtract a value for a quantity of electrical energy which is to be converted by the suspension system (13) in the case of a driving manoeuvre presently being carried out from a present value for a quantity of electrical energy which is stored in the at least one electrical energy store (22), and to compare a value determined thereby for a difference of electrical energy to at least one threshold value, wherein in the case that the difference of electrical energy is greater than a maximum threshold value and that at least one first electromechanical regulator (10, 12) is to be operated as a generator, the control device (26) is formed to operate at least one second electromechanical regulator (10, 12) as a motor, wherein at least one part of the electrical energy which is generated by the at least one first electromechanical regulator (10, 12) is converted into mechanical energy at the same time by the at least one second electromechanical regulator (10, 12).

10. System according to claim 9, in which in the case that the difference in electrical energy is less than a minimum threshold value and that at least one first electromechanical regulator (10, 12) is to be operated as a motor, the control device (26) is formed to operate at least one second electromechanical regulator (10, 12) as a generator, wherein at least one part of the electrical energy which is to be consumed by the at least one first electromechanical regulator (10, 12) is to be generated at the same time by the at least one second electromechanical regulator (10, 12).

## Revendications

1. Procédé de contrôle d'un système de suspension actif (13) d'un véhicule automobile, dans lequel le système de suspension actif (13) comporte comme actionneurs (6, 8) au moins un ressort et au moins un amortisseur, dans lequel il est associé à chaque actionneur (6, 8) un convertisseur électromécanique (10, 12) qui coopère avec cet actionneur (6, 8), dans lequel chaque convertisseur électromécanique (10, 12) est relié à au moins un accumulateur d'énergie électrique (22) du véhicule automobile par l'intermédiaire d'un réseau de bord (14) du véhicule automobile, dans lequel au moins un convertisseur électromécanique (10, 12) est exploité comme générateur, lequel au moins un convertisseur électromécanique (10, 12) produit lors d'une manoeuvre de conduite de l'énergie électrique dont la quantité présente une valeur négative, ou l'au moins un convertisseur électromécanique (10, 12) est exploité comme moteur, lequel au moins un convertisseur électromécanique (10, 12) consomme de l'énergie électrique dont la quantité présente une valeur positive, dans lequel une valeur pour une quantité d'énergie électrique qui est convertie par le système de suspension (13) lors d'une manoeuvre de conduite actuellement à effectuer est soustraite d'une valeur actuelle pour une quantité d'énergie électrique qui est stockée dans l'au moins un accumulateur d'énergie électrique (22) et une valeur ainsi déterminée pour une différence d'énergie électrique est comparée à au moins une valeur de seuil, dans lequel si la différence d'énergie électrique est plus grande qu'une valeur de seuil maximale et si au moins un premier convertisseur électromécanique (10, 12) est exploité comme générateur, au moins un deuxième convertisseur électromécanique (10, 12) est alors exploité comme moteur, dans lequel au moins une partie de l'énergie électrique qui est produite par l'au moins un premier convertisseur électromécanique (10, 12) est transformée simultanément en énergie mécanique par l'au moins un deuxième convertisseur électromécanique (10, 12).

2. Procédé selon la revendication 1, dans lequel au moins une machine électromécanique supplémentaire qui est reliée à l'au moins un accumulateur d'énergie électrique (22) est exploitée comme moteur.

3. Procédé selon la revendication 1 ou 2, dans lequel si la différence d'énergie électrique est plus petite qu'une valeur de seuil minimale et si au moins un premier convertisseur électromécanique (10, 12) est exploité comme moteur, au moins un deuxième convertisseur électromécanique (10, 12) est alors exploité comme générateur, dans lequel au moins une partie de l'énergie électrique qui est consommée par l'au moins un premier convertisseur électromécanique (10, 12) est produite simultanément par l'au moins un deuxième convertisseur électromécanique (10, 12).

4. Procédé selon la revendication 3, dans lequel au moins une machine électromécanique supplémentaire qui est reliée à l'au moins un accumulateur d'énergie électrique (22) est exploitée comme générateur.

5. Procédé selon l'une quelconque des revendications précédentes, dans lequel chaque convertisseur électromécanique (10, 12) est exploité comme générateur dans un premier mode de fonctionnement et comme moteur dans un deuxième mode de fonctionnement, dans lequel chaque convertisseur électromécanique (10, 12) exploité comme générateur dans le premier mode de fonctionnement est sollicité mécaniquement par l'actionneur (6, 8) associé, dans lequel de l'énergie mécanique est transformée par le convertisseur électromécanique (10, 12) exploité comme générateur en énergie électrique qui est stockée dans l'au moins un accumulateur d'énergie électrique (22), dans lequel de l'énergie électrique provenant de l'au moins un accumulateur d'énergie électrique (22) est transformée par chaque convertisseur électromécanique (10, 12) exploité comme moteur dans le deuxième mode de fonctionnement en énergie mécanique par laquelle l'actionneur (6, 8) associé au convertisseur électromécanique (10, 12) est sollicité mécaniquement.

6. Procédé selon l'une quelconque des revendications précédentes, dans lequel au moins un premier convertisseur électromécanique (10, 12) qui est associé à au moins un premier actionneur (6, 8) d'une roue (4) du véhicule automobile est exploité comme générateur et au moins un deuxième convertisseur électromécanique (10, 12) qui est associé à au moins un deuxième actionneur (6, 8) de la même roue (4) est exploité simultanément comme moteur.

7. Procédé selon l'une quelconque des revendications précédentes, dans lequel au moins un premier convertisseur électromécanique (10, 12) qui est associé à au moins un actionneur (6, 8) réalisé sous forme de ressort est exploité comme générateur et au moins un autre convertisseur électromécanique (10, 12) qui est associé à au moins un actionneur (6, 8) réalisé sous forme d'amortisseur est exploité simultanément comme moteur.

8. Procédé selon l'une quelconque des revendications précédentes, dans lequel une valeur d'un courant dont a besoin pendant la manoeuvre de conduite le système de suspension (13) en vue de la conversion d'énergie électrique est comparée à une valeur de seuil, dans lequel si la valeur du courant est plus petite que la valeur de seuil et si l'au moins un premier convertisseur électromécanique (10, 12) est exploité comme générateur, l'au moins un deuxième convertisseur électromécanique (10, 12) est exploité comme moteur, dans lequel au moins une partie de l'énergie électrique qui est produite par l'au moins un premier convertisseur électromécanique (10, 12) est transformée simultanément en énergie mécanique par l'au moins un deuxième convertisseur électromécanique (10, 12).

9. Système de contrôle d'un système de suspension actif (13) d'un véhicule automobile, dans lequel le système de suspension actif (13) comporte comme actionneurs (6, 8) au moins un ressort et au moins un amortisseur, dans lequel il est associé à chaque actionneur (6, 8) un convertisseur électromécanique (10, 12) qui coopère avec cet actionneur (6, 8), dans lequel chaque convertisseur électromécanique (10, 12) est relié à au moins un accumulateur d'énergie électrique (22) du véhicule automobile par l'intermédiaire d'un réseau de bord (14) du véhicule automobile, dans lequel au moins un convertisseur électromécanique (10, 12) doit être exploité comme générateur, lequel au moins un convertisseur électromécanique (10, 12) doit produire lors d'une manoeuvre de conduite de l'énergie électrique dont la quantité présente une valeur négative, ou l'au moins un convertisseur électromécanique (10, 12) doit être exploité comme moteur, lequel au moins un convertisseur électromécanique (10, 12) doit consommer de l'énergie électrique dont la quantité présente une valeur positive, dans lequel le système comporte un appareil de contrôle (26) qui est conçu pour soustraire d'une valeur actuelle pour une quantité d'énergie électrique qui est stockée dans l'au moins un accumulateur d'énergie électrique (22) une valeur pour une quantité d'énergie électrique qui doit être convertie par le système de suspension (13) lors d'une manoeuvre de conduite actuellement et pour comparer une valeur ainsi déterminée pour une différence d'énergie électrique à au moins une valeur de seuil, dans lequel l'appareil de contrôle (26), si la différence d'énergie électrique est plus grande qu'une valeur de seuil maximale et si au moins un premier convertisseur électromécanique (10, 12) doit être exploité comme générateur, est conçu pour exploiter comme moteur au moins un deuxième convertisseur électromécanique (10, 12), dans lequel au moins une partie de l'énergie électrique qui doit être produite par l'au moins un premier convertisseur électromécanique (10, 12) doit être transformée simultanément en énergie mécanique par l'au moins un deuxième convertisseur électromécanique (10, 12).

10. Système selon la revendication 9, dans lequel l'appareil de contrôle (26), si la différence d'énergie électrique est plus petite qu'une valeur de seuil minimale et si au moins un premier convertisseur électromécanique (10, 12) doit être exploité comme moteur, est conçu pour exploiter comme générateur au moins un deuxième convertisseur électromécanique (10, 12), dans lequel au moins une partie de l'énergie électrique qui doit être consommée par l'au moins un premier convertisseur électromécanique (10, 12) doit être produite simultanément par l'au moins un deuxième convertisseur électromécanique (10, 12).
